# EUROPÄISCHE PATENTANMELDUNG

(11) **EP 4 582 403 A2**
(43) Veröffentlichungstag der Anmeldung: **09.07.2025**
(21) Anmeldenummer: 25171390.5
(22) Anmeldetag: 21.02.2020
(51) Int. Cl.: C04B 40/06

(54) **BINDEMITTELZUSAMMENSETZUNG MIT LANGER VERARBEITUNGSZEIT**

(30) Priorität: 21.02.2019 DE 102019104414
(62) Teilanmeldung aus: 20158857.1
(71) Anmelder: Sika Technology AG, 6340 Baar (CH)
(72) Erfinder: MC ILHATTON, Michael, 86159 Augsburg (DE); STREICHER, Markus, 86159 Augsburg (DE); BADER, Juergen, 86159 Augsburg (DE); HOETZL, Klaus-Dieter, 86159 Augsburg (DE)
(74) Vertreter: Sika Patent Attorneys

(57) **Zusammenfassung**

Eine pulverförmige Bindemittelzusammensetzung, umfasst a) Portlandzement, b) Aluminatzement in einem Gewichtsverhältnis von a) : b) von 90:10 bis 10:90, c) 0,1 bis 50 Gew.-% wenigstens einer Calciumsulfatquelle, gerechnet als CaSO₄, bezogen auf das Gesamtgewicht der Komponenten a), b) und c), d) eine erste Kaliumquelle, ausgewählt unter Kaliumsalzen anorganischer Säuren und Kaliumsalzen von C₁-C₃-Carbonsäuren, und e) eine zweite Kaliumquelle, ausgewählt unter Kaliumsalzen von α-Hydroxycarbonsäuren. Die Bindemittelzusammensetzung weist unabhängig von der Umgebungstemperatur lange Verarbeitungszeiten und dennoch hohe Frühfestigkeiten auf. Die lange Verarbeitungszeit ermöglicht die Ausführung großflächiger Lastverteilungsschichten.

## Beschreibung

Die vorliegende Erfindung betrifft eine Bindemittelzusammensetzung, die Portlandzement, Aluminatzement und Calciumsulfat in bestimmten Verhältnissen enthält.

Trockenmörtel ist ein Baustoff, der aus Bindemitteln wie Zement oder Kalk und nicht reaktiven Füllstoffen wie Kreide oder Quarzsand besteht und nach Zugabe von Anmachwasser durch chemische Reaktion der Bindemittel erhärtet. Mörtel dient in erster Linie zur Errichtung von Lastverteilungsschichten von großen Flächen und zur Errichtung von Bauwerken.

Das Erhärten des Bindemittels beruht auf der Bildung von Hydratationsprodukten, die bei der Reaktion mit dem Anmachwasser entstehen. Bei den Hauptbestandteilen von Portlandzement handelt es sich um Calciumsilicate, deren Hydrate festigkeitsbildende Eigenschaften aufweisen. Hauptbestandteil vom Aluminatzement sind Calciumaluminate, deren Hydrate festigkeitsbildende Eigenschaften aufweisen. Nach dem Erhärten und Erstarren von Portlandzement mit Aluminatzement und dem Calciumsulfat entsteht ein steinartiger, wasserbeständiger Stoff, der sich durch hohe Festigkeit auszeichnet.

Bei der Verlegung großer Flächen als Lastverteilungsschicht tritt bei der Verwendung zementärer Bindemittel jedoch häufig das Problem auf, dass die Verarbeitungszeit zu kurz ist, große Lastverteilungsschichten, die schwimmend ausgeführt werden, zu Rissen oder Verwölbungen führen und mäßige Festigkeiten erzielen.

Daher besteht ein Bedarf an Bindemittelzusammensetzungen, mit denen sich unabhängig von der Umgebungstemperatur lange Verarbeitungszeiten einstellen lassen und große Flächen von z.B. über 100 m² als Lastverteilungsschicht schwimmend auf Dämmung erzielen lassen.

Die EP 0 228 595 offenbart eine schnellerhärtende Bindemittelmischung, die aus Portlandzementklinker, reaktiven Calciumaluminaten und/oder Tonerdezement und reaktivem Calciumsulfat besteht und außerdem Abbindeverzögerer und Alkalicarbonat enthält.

Die DE 28 57 396 C2 offenbart einen rasch härtenden Zement, der aus Portlandzement und einem amorphes Calciumaluminat und anorganisches Sulfat enthaltenden Härtungsbeschleuniger besteht. Der Zement enthält ein Verzögerungsmittel, das Glucon- und/oder Weinsäure und/oder deren wasserlösliche Salze, Citronensäure und/oder deren Alkalisalze und Alkalicarbonat enthält.

Die US 3,973,978 offenbart ein Verfahren zur Herstellung von schnellhärtenden Zementen, wobei man eine Zementpaste mit einer Suspension aus Calciumaluminat und anorganischem Sulfat mischt. Letztere kann Härtungsverzögerer, wie Carbonsäuren, gegebenenfalls im Gemisch mit Carbonaten, enthalten.

Aufgabe der vorliegenden Erfindung war es, eine Bindemittelzusammensetzung bereitzustellen, die unabhängig von der Umgebungstemperatur lange Verarbeitungszeiten und dennoch hohe Frühfestigkeiten aufweist. Eine lange Verarbeitungszeit ist notwendig, um größere Flächen ausführen zu können.

Die Aufgabe wird gelöst durch eine pulverförmige Bindemittelzusammensetzung, welche umfasst
a) Portlandzement,
b) Aluminatzement, in einem Gewichtsverhältnis von a) : b) von 90:10 bis 10:90, vorzugsweise 80:20 bis 40:60, besonders bevorzugt 70:30 bis 50:50,
c) 0,1 bis 50 Gew.-%, vorzugsweise 10 bis 45 Gew.-%, besonders bevorzugt 12 bis 27 Gew.-%, wenigstens einer Calciumsulfatquelle, gerechnet als CaSO₄, bezogen auf das Gesamtgewicht der Komponenten a), b) und c),
d) eine erste Kaliumquelle, ausgewählt unter Kaliumsalzen anorganischer Säuren und Kaliumsalzen von C₁-C₃-Carbonsäuren, und
e) eine zweite Kaliumquelle, ausgewählt unter Kaliumsalzen von α-Hydroxycarbonsäuren.

Die Erfindung betrifft auch ein Verfahren zur Herstellung der pulverförmigen Bindemittelzusammensetzung durch Mischen der vorgenannten Bestandteile in beliebiger Reihenfolge.

Die Bindemittelzusammensetzung weist eine lange Verarbeitungszeit und hohe Frühfestigkeiten unabhängig von der Umgebungstemperatur auf und zeigt nahezu keine Verwölbung.

Als "Portlandzement" sind anorganische, hydraulische Bindemittel geeignet, die eine Alit-Phase der chemischen Formel 3CaO.SiO₂ oder "C₃S" in der Zement-Schreibweise umfassen. Portlandzement enthält gemahlenen Portlandzementklinker und kann verschiedene weitere Bestandteile enthalten. Für die vorliegende Erfindung bevorzugte Portlandzemente enthalten wenigstens 65 Gew.-% Portlandzementklinker, insbesondere wenigstens 95 Gew.-% Portlandzementklinker. Gewöhnlich werden Portlandzemente in fünf Hauptzementarten unterteilt: CEM I, II, III, IV und V gemäß DIN EN 197-1 (11/2011). Portlandzement der Kategorie CEM I ist bevorzugt. CEM I Zement enthält etwa 70 Gew.-% CaO und MgO, etwa 20 Gew.-% SiO₂, etwa 10 Gew.-% Al₂O₃ und Fe₂O₃. Dieser Zement wird durch Mahlen und Brennen von Kalkstein, Kreide und Ton gewonnen.

Typischerweise werden dem Portlandzement vor oder während der Mahlung des Zementklinkers Calciumsulfatquellen, wie Anhydrit, Halbhydrat, Dihydrat oder Gemische davon, als Erstarrungsregler zugegeben. Portlandzemente der Klassifikation CEM I, die eine oder mehrere der genannten Calciumsulfatquellen, gerechnet als CaSO₄, im Bereich von 0,5 bis 5 Gew.-% enthalten, sind besonders geeignet. Die Menge und Art an Erstarrungsreglern bemessen sich im Allgemeinen nach der Mahlfeinheit des Portlandzements, dem Gehalt und der Reaktivität des Tricalciumaluminats C3A im Zementklinker. Das Angebot an wasserlöslichem Sulfat soll bei Beginn der Hydratation gerade so hoch sein, dass der hydratisierende C3A-Anteil als Ettringit gebunden wird. Die Menge an Erstarrungsreglern ist durch die Zementnorm DIN EN 197-1 begrenzt. Calciumsulfatquellen, die dem Portlandzement als Erstarrungsregler zugegeben, bleiben bei der Komponente c) unberücksichtigt.

Aluminatzemente (Calcium-Aluminat-Zement, Tonerdeschmelzzement bzw. Tonerdezement) umfassen hydraulische Calciumaluminate, insbesondere Calciummonoaluminat CA. Daneben können andere Phasen, wie Calciumdialuminat (CA2), Mayenit (C12A7), Tetracalciumaluminoferrit (C4AF), Tricalciumaluminat (C3A) vorliegen. Aluminatzemente können z.B. durch Schmelzen von Calciumoxid (CaO) oder Kalkstein (CaCO₃) mit Bauxit oder Aluminat erhalten werden. Aluminatzemente umfassen etwa 20 bis 40 Gew.-% CaO, bis zu 5 Gew.-% SiO₂, etwa 40 bis 80 Gew.-% Al₂O₃ und bis zu etwa 20 Gew.-% Fe₂O₃. Calcium-AluminatZemente sind in der Norm DIN EN 14647 (01/2006) definiert.

Gemäß einer besonders bevorzugten Ausführungsform enthält die Bindemittelzusammensetzung Portlandzement und Aluminatzement in einem Gewichtsverhältnis von 90:10 bis 10:90, mehr bevorzugt 80:20 bis 40:60, besonders bevorzugt 70:30 bis 50:50.

Der Ausdruck "Calciumsulfatquelle" bezeichnet Verbindungen, die Calciumsulfat in unterschiedlichen Hydratationszuständen enthalten. Geeignet sind das bei der Rauchgas-Entschwefelung anfallende Calciumsulfat-Dihydrat (CaSO₄ x 2H₂O), Calciumsulfat-Hemihydrat (CaSO₄ x ½ H₂O) und Calciumsulfat-Anhydrit (CaSO₄) sowie natürlich vorkommender Gips CaSO₄ x 2H₂O. Gebrannter Gips kann in einer Vielzahl von Hydratationszuständen gemäß der allgemeinen Formel CaSO₄ x nH₂O, mit 0 ≤ n < 2, vorliegen.

Calciumsulfatquellen mit einer Löslichkeit (20 ° C) von weniger als 5 g/l sind bevorzugt. Zu Calciumsulfatquellen mit einer Löslichkeit (20 ° C) von weniger als 5 g/l zählen Natur-Anhydrit (CaSO₄; 3 g/l) und Dihydrat (CaSO₄ x 2H₂O; 2 g/l). Hier und im Folgenden gibt der Begriff "Löslichkeit" die Masse einer Verbindung in g an, die sich in 1 l Wasser von pH 7.0 bei 20 ° C löst. Calciumsulfat-Anhydrit ist am meisten bevorzugt.

Vorzugsweise enthält die erfindungsgemäße Bindemittelzusammensetzung 10 bis 45 Gew.-%, insbesondere 12 bis 27 Gew.-%, Calciumsulfatquelle, gerechnet als CaSO₄, bezogen auf das Gesamtgewicht der Komponenten a), b) und c).

Die mit Wasser angemachte pulverförmige Bindemittelzusammensetzung bindet ab, wenn die chemische Reaktion des Bindemittels mit Wasser beginnt. Die Masse erstarrt danach infolge von Gelbildungen und erhärtet infolge von Kristallisierungen. In Anwesenheit von Sulfat bildet sich Ettringit.

Erfindungsgemäß werden wenigstens zwei Kaliumquellen unterschiedlicher Konstitution verwendet. Eine erste Kaliumquelle ist ausgewählt unter Kaliumsalzen anorganischer Säuren und Kaliumsalzen von C₁-C₃-Carbonsäuren. Eine zweite Kaliumquelle ist ausgewählt unter Kaliumsalzen von α-Hydroxycarbonsäuren.

Vermutlich senken hohe Konzentrationen an Kaliumionen die Löslichkeit von Calciumionen. Daher wird die Auflösung calciumreicher Phasen verzögert, die der Ettringitbildung vorangeht. Außerdem stabilisieren gelöste Kaliumionen Sulfationen in Lösung. Die Sulfationen stehen nicht zur Ettringitbildung zur Verfügung und die Bildung von Ettringit wird verzögert. Es wird vermutet, dass die beiden Kaliumquellen unterschiedliche Auflösungsgeschwindigkeit in der alkalischen Umgebung der angemachten Bindemittelzusammensetzung aufweisen. Das Vorhandensein der ersten Kaliumquelle stellt sicher, dass das Anmachwasser anfänglich hoch konzentriert an Kaliumionen ist. Bei tiefen Temperaturen wirkt die erste Kaliumquelle als Härtungsbeschleuniger. Das Vorhandensein der zweiten Kaliumquelle dient der Freisetzung von Kaliumionen über einen längeren Zeitraum und vermeidet abrupte Konzentrationsänderungen. Ihre Auflösung setzt auch Anionen der α-Hydroxycarbonsäure frei, die als Abbindeverzögerer wirken.

Gerechnet als K₂O wird die erste Kaliumquelle (Komponente d)) vorzugsweise in einer Menge von 0,01 bis 2,0 Gew.-% verwendet, bezogen auf das Gesamtgewicht der Komponenten a), b) und c).

Gerechnet als K₂O wird die zweite Kaliumquelle (Komponente e)) vorzugsweise in einer Menge von 0,05 bis 1,0 Gew.-% verwendet, bezogen auf das Gesamtgewicht der Komponenten a), b) und c).

Gemäß einer bevorzugten Ausführungsform verwendet man die erste Kaliumquelle und die zweite Kaliumquelle in einem Gewichtsverhältnis von 10:90 bis 90:10, besonders bevorzugt von 40:60 bis 80:20, jeweils gerechnet als K₂O.

Die Kaliumsalze können reine Kaliumsalze sein, die als Kationen ausschließlich Kaliumkationen enthalten, oder gemischte Salze, d.h. sie können neben Kalium weitere Kationen, insbesondere andere Alkalimetallkationen wie Natrium, enthalten. Die Kaliumsalze können in unterschiedlichen Hydratationszuständen vorliegen. Vorzugsweise werden handelsübliche Hydratationszustände verwendet.

Die erste Kaliumquelle ist ausgewählt unter Kaliumsalzen anorganischer Säuren und Kaliumsalzen von C₁-C₃-Carbonsäuren. Die Kaliumsalze der anorganischen Säuren weisen vorzugsweise kein acides Wasserstoffatom auf. Als Beispiele lassen sich Kaliumcarbonat, Kaliumhydrogencarbonat, Kaliumchlorid und Kaliumnitrat anführen. Die Kaliumsalze von C₁-C₃-Carbonsäuren leiten sich vorzugsweise von unsubstituierten C₁-C₃-Carbonsäuren ab. Als Beispiele lassen sich Kaliumformiat, Kaliumacetat und Kaliumpropionat anführen.

Besonders bevorzugt ist die erste Kaliumquelle ausgewählt unter Kaliumcarbonat (K₂CO₃), Kaliumhydrogencarbonat, Kaliumformiat und Kaliumacetat, und ist insbesondere Kaliumcarbonat.

Die zweite Kaliumquelle ist ausgewählt unter Kaliumsalzen von α-Hydroxycarbonsäuren. Als Beispiele lassen sich Kaliumglycolat, Kaliumtartrat, Natriumkaliumtartrat und Kaliumcitrat anführen. Bevorzugt ist das Kaliumsalz der α-Hydroxycarbonsäure ausgewählt unter Natriumkaliumtartrat-tetrahydrat (Seignettesalz) und Trikaliumcitrat-Monohydrat. Natriumkaliumtartrat-tetrahydrat ist besonders bevorzugt.

Die erfindungsgemäße Bindemittelzusammensetzung ist vorzugsweise frei von Lithiumsalzen.

Vorzugsweise umfasst die Bindemittelzusammensetzung außerdem wenigstens eine Eisen(II)-ionenquelle, insbesondere eine Eisen(II)-ionenquelle mit einer Löslichkeit (20 ° C) von mehr als 90 g/l. Geeignete Eisen(II)-ionenquellen sind z.B. unter Eisen(II)-sulfat-heptahydrat, Eisen(II)-sulfat-tetrahydrat und Eisen(II)-sulfat-monohydrat ausgewählt.

Zement kann aufgrund seines Chromatgehalts allergieauslösend für Hautekzeme wirken. Hierbei ist insbesondere das lösliche Chromat (Chrom(VI)) die Ursache der allergischen Reaktionen. Eisen(II)-ionen reduzieren das lösliche Chromat (Chrom(VI)) zu unlöslichem Chrom(III). Hierdurch können gesundheitliche Beeinträchtigungen vermieden werden.

Falls verwendet, wird die Eisen(II)-ionenquelle bevorzugt in einer Menge von 0,01 bis 10,0 Gew.-% verwendet, bezogen auf das Gesamtgewicht der Komponenten a), b) und c).

Vorzugsweise enthält die Bindemittelzusammensetzung außerdem einen Abbindeverzögerer. Geeignete Verzögerer sind Lignosulfonate; Cellulosederivate, wie Hydroxyethylcellulose, Carboxymethylhydroxyethylcellulose; α-Hydroxycarbonsäuren, wie Weinsäure, Citronensäure, Äpfelsäure, Tartronsäure, Gluconsäure; Gluconate, wie Natriumgluconat; Gluconsäurelacton, Gallussäure, Pyrogallol, 2,4,6-Trihydroxybenzoesäure sowie Alkalisalze davon; synthetische Verzögerer, wie 2-Acrylamido-2-methylpropansulfonsäure (AMPS)-Copolymere; und anorganische Verbindungen, wie Natriumphosphat, Natriumpolyphosphat oder Zinksalze, z.B. ZnO oder Zinksulfat.

α-Hydroxycarbonsäuren und deren Salze sind bevorzugte Abbindeverzögerer. Falls verwendet, wird der Abbindeverzögerer bevorzugt in einer Menge von 0 bis 0,5 Gew.-% verwendet, bezogen auf das Gesamtgewicht der Komponenten a), b) und c). Die über Komponente e) eingebrachte α-Hydroxycarbonsäure wird dabei nicht berücksichtigt.

Die Bindemittelzusammensetzung kann außerdem eine latent-hydraulische und/oder eine puzzolanische Komponente enthalten. Die latent-hydraulische und/oder puzzolanische Komponente ist z.B. ausgewählt unter Hüttensand, gebranntem Ölschiefer, Flugasche, Metakaolinen oder Microsilica und/oder einer Mischung davon.

Bevorzugt enthält die Bindemittelzusammensetzung eine latent-hydraulische und/oder eine puzzolanische Komponente in einer Menge von 1 bis 10 Gew.-%, bezogen auf das Gesamtgewicht der Komponenten a), b) und c).

Die Bindemittelzusammensetzung kann außerdem einen Füllstoff enthalten. Der Begriff "Füllstoff" bezieht sich auf Materialien, die hinzugefügt werden können, um das Volumen zu erhöhen, ohne die Eigenschaften der Bindemittelzusammensetzung zu beeinträchtigen. Der Füllstoff ist z.B. ausgewählt unter natürlichen oder industriell hergestellten oder rezyklierten Gesteinskörnungen oder Gesteinsmehlen.

Geeignet sind natürliche oder industriell hergestellte oder rezyklierte Gesteinskörnungen mit üblichen Kornverteilungen, z. B. Gauß'schen Kornverteilungen mit maximaler Korngröße bis z.B. 4 mm und mit Kornrohdichten zwischen 0,3 kg/dm³ und 3 kg/dm³. Beispiele für natürliche Gesteinskörnungen sind Quarz-, Kalkstein-, Sandstein-, Porphyr-, Granit-, Basalt-, Grauwacken-, Gneissande. Beispiele für künstliche Gesteinskörnungen sind Hüttensande, Schlacken und rezyklierte Beton- oder Mörtelkörnungen.

Weiter eignen sich mineralische Mehle mit üblichen Kornverteilungen, z.B. Gauß'schen Kornverteilungen mit maximalen Korngrößen bis z.B. 0,1 mm. Beispiele sind Mehle aus Quarz, Kalkstein, Dolomitstein, Ton, Talkum, Glimmer oder auch Mehle aus Bims, Schaumglas, Porenbeton, Perlit, Vermiculit.

Bevorzugt enthält die Bindemittelzusammensetzung den Füllstoff in einer Menge von 20 bis 80 Gew.-%, bezogen auf das Gesamtgewicht der Komponenten a), b) und c).

Die Bindemittelzusammensetzung kann außerdem weitere Zusatzstoffe enthalten. Weitere Zusatzstoffe sind z.B. ausgewählt unter Verdickern, Wasserretentionsmitteln, pH-Modifikatoren, Beschleunigern, Rheologiemodifikatoren, Hydrophobierungsmitteln, Pigmenten, organischen oder anorganischen Fasern sowie Gemischen davon.

Verdickungsmittel verbessern im hydraulischen Frischmörtel die Rheologie. Beispiele für Verdickungsmittel sind Polysaccharide wie Celluloseether und modifizierte Celluloseether, Stärkeether, Guarkernmehl oder Xanthan, Schichtsilikate, Polycarbonsäuren wie Polyacrylsäure und deren Teilester, Polyvinylalkohole, welche gegebenenfalls acetalisiert und/oder hydrophob modifiziert sein können, Casein und assoziativ wirkende Verdicker.

Die Bindemittelzusammensetzung kann außerdem grenzflächenaktive Substanzen enthalten. Diese sind z.B. ausgewählt unter Luftporenbildnern, Entschäumern, Benetzungsadditiven, Superplastifizierungsmitteln, Tensiden sowie Gemischen davon.

Die Bindemittelzusammensetzung kann außerdem ein redispergierbares Polymerpulver enthalten. Redispergierbare Polymerpulver verleihen dem Festmörtel verbesserte Haftfestigkeit, verbesserte Biegefestigkeit und verbesserte Stoßfestigkeit und gewährleisten eine geringere Wasseraufnahme des erhärteten Festmörtels. Besonders bevorzugt sind redispergierbare Polymerpulver auf Basis von PE, PP, PVC, PVAc, PVOH, PS, PAc, Versataten und/oder Mischungen davon.

Die erfindungsgemäße Bindemittelzusammensetzung wird in der Regel als Trockenmörtelmischung bereitgestellt. Bei ihrer Verwendung wird die Trockenmörtelmischung mit Wasser angemacht, wobei pro Kilogramm Trockenmörtel 60 bis 400 ml Wasser, z.B. etwa 80 ml Wasser, verwendet werden. Die Zugabe des Wassers erfolgt in einer geeigneten Vorrichtung, z.B. einer Estrichmaschine, unter Rühren mit geeigneten Rührvorrichtungen, z.B. einem Korbrührer, der an eine langsam laufende Bohrmaschine (z.B. etwa 400 Umdrehungen/min) angeschlossen werden kann.

Die nachfolgenden Beispiele sollen die Erfindung näher erläutern.

### Beispiele

### Trockenmörtel 1 (Referenz)

| | |
|---|---|
| 30 Gew.-% | Portlandzement |
| 22 Gew.-% | Tonerdezement |
| 12 Gew.-% | Calciumsulfat |
| 1 Gew.-% | Microsilica |
| 34,6 Gew.-% | Quarzsand |
| 0,2 Gew.-% | Lithiumcarbonat |
| 0,2 Gew.-% | Weinsäure |

### Anmachwassermenge: 80 ml/kg

| Trockenmörtel | 2 | 3 | 4^{#} | 5^{#} | 6^{#} | 7^{#} | 8 | 9 | 10 | 11 | 12^{#} | 13^{#} | 14 |
|---|---|---|---|---|---|---|---|---|---|---|---|---|---|
| | | | | | | | | | | | | | |
| Portlandzement [Gew.-%] | 30 | 30 | 30 | 30 | 30 | 30 | 30 | 30 | 30 | 30 | 30 | 30 | 30 |
| Tonerdezement [Gew.-%] | 22 | 22 | 22 | 22 | 22 | 22 | 22 | 22 | 22 | 22 | 22 | 22 | 22 |
| Calciumsulfat [Gew.-%] | 12 | 12 | 12 | 12 | 12 | 12 | 12 | 12 | 12 | 12 | 12 | 12 | 12 |
| Microsilica [Gew.-%] | 1 | 1 | 1 | 1 | 1 | 1 | 1 | 1 | 1 | 1 | 1 | 1 | 1 |
| Quarzsand [Gew.-%] | 33,95 | 33,85 | 34,45 | 34,45 | 33,95 | 33,95 | 33,95 | 33,95 | 33,95 | 33,95 | 33,95 | 33,95 | 33,95 |
| Kaliumcarbonat [Gew.-%] | 0,5 | 0,5 | 0 | 0,5 | 0,5 | 0 | 0 | 0 | 0 | 0 | 0,5 | 0,5 | 0,5 |
| Natriumkaliumtartrat-tetrahydrat [Gew.-%] | 0,5 | 0,5 | 0,5 | 0 | 0 | 0,5 | 0,5 | 0,5 | 0,5 | 0,5 | 0 | 0 | 0 |
| Eisen(II)-sulfat-heptahydrat [Gew.-%] | 0,05 | 0,05 | 0,05 | 0,05 | 0,05 | 0,05 | 0,05 | 0,05 | 0,05 | 0,05 | 0,05 | 0,05 | 0,05 |
| Weinsäure [Gew.-%] | 0 | 0,1 | 0 | 0 | 0,5 | 0 | 0 | 0 | 0 | 0 | 0 | 0 | 0 |
| Natriumcarbonat [Gew.-%] | 0 | 0 | 0 | 0 | 0 | 0,5 | 0 | 0 | 0 | 0 | 0 | 0 | 0 |
| Kaliumhydrogencarbonat [Gew.-%] | 0 | 0 | 0 | 0 | 0 | 0 | 0,5 | 0 | 0 | 0 | 0 | 0 | 0 |
| Kaliumnitrat [Gew.-%] | 0 | 0 | 0 | 0 | 0 | 0 | 0 | 0,5 | 0 | 0 | 0 | 0 | 0 |
| Kaliumchlorid [Gew.-%] | 0 | 0 | 0 | 0 | 0 | 0 | 0 | 0 | 0,5 | 0 | 0 | 0 | 0 |
| Kaliumformiat [Gew.-%] | 0 | 0 | 0 | 0 | 0 | 0 | 0 | 0 | 0 | 0,5 | 0 | 0 | 0 |
| Natriumgluconat [Gew.-%] | 0 | 0 | 0 | 0 | 0 | 0 | 0 | 0 | 0 | 0 | 0,5 | 0 | 0 |
| Zitronensäure [Gew.-%] | 0 | 0 | 0 | 0 | 0 | 0 | 0 | 0 | 0 | 0 | 0 | 0,5 | 0 |
| Trikaliumcitrat [Gew.-] | 0 | 0 | 0 | 0 | 0 | 0 | 0 | 0 | 0 | 0 | 0 | 0 | 0,5 |

| | | | | | | | | | | | | | |
|---|---|---|---|---|---|---|---|---|---|---|---|---|---|
| # nicht erfindungsgemäß | | | | | | | | | | | | | |

### Anmachwassermenge: jeweils 80 ml/kg

Von den erhaltenen Frischmassen wurden Prüfkörper hergestellt (160 mm x 40 mm x 40 mm), anhand derer nach DIN EN 12190 die Druckfestigkeit bestimmt wurde.

### Erstarrungsverhalten nach Vicat

Die Verarbeitungszeit der Mörtel wurde bei verschiedenen Lagertemperaturen in Anlehnung an die Bestimmung des Erstarrungsverhaltens nach Vicat (in Anlehnung an EN 196-3) anhand des Eindringverhaltens einer Nadel in eine Mörtelprobe beurteilt. Der Erstarrungsbeginn ist erreicht, sobald die Nadel nicht mehr vollständig (in Relation zum ersten Einstich) in die Mörtelmasse eindringt, und repräsentiert somit das Ende der Verarbeitungszeit.

### Schwindmessung nach Graf-Kaufmann

Es wurden die Längenänderungen von 160 mm x 40 mm x 40 mm Prüfkörpern (Mörtelprismen) bei verschiedenen Lagertemperaturen im Vergleich zu einem Referenzprisma bestimmt. Die Messung erfolgt mit einer Fein-Messuhr über zwei Messzapfen, die in der Längsachse des Probekörpers angebracht sind, in Anlehnung an die DIN 52450 "Bestimmung des Schwindens und Quellens an kleinen Probekörpern" (1985).

### Bestimmung der Verwölbung

In eine mit Folie ausgelegte nach oben offene U-förmige rechtwinklige Holzschalung (200 cm x 20 cm) wird der Mörtel (Schichtstärke 5 cm) gegossen. Den frischen Mörtel lässt man für 24 Stunden mit Folie abgedeckt erhärten. Anschließend wird die Abdeckfolie entfernt und an 3 Punkten (Mitte; linker und rechter Rand) werden Feinmessuhren aufgesetzt, wobei die Messuhren an einem vom Prüfkörper entkoppelten Galgen befestigt sind.

Das Verwölbungsmaß beschreibt die Randverkrümmung des Mörtels d. h. eine bogenförmige Verformung des ausgehärteten Mörtels, die sowohl konkav (Wannenbildung) als auch konvex (Buckelbildung) erfolgen kann. Die angegebenen Werte beschreiben die Höhendifferenz zwischen den Rändern und dem Mittelpunkt. Positive Werte bezeichnen eine konkave Verwölbung.

Die Ergebnisse sind in der Tabelle 1 zusammengefasst.

**Tabelle 1:**

| Trockenmörtel | Trockenmörtel 1 (Referenz) | | | Trockenmörtel 2 | | | Trockenmörtel 3 | | | Trockenmörtel 4^{#} | | | Trockenmörtel 5^{#} | | |
|---|---|---|---|---|---|---|---|---|---|---|---|---|---|---|---|
| Temperatur [° C] | 30 | 23 | 5 | 30 | 23 | 5 | 30 | 23 | 5 | 30 | 23 | 5 | 30 | 23 | 5 |
| Verarbeitungszeit [h] | 0,3 | 1 | 20 | 3,5 | 3,5 | 3 | 3,5 | 4 | 3 | 2 | 2 | 6 | 1 | 1 | 0,2 |
| Druckfestigkeit nach 1 d [N/mm²] | 8 | 6 | 0 | 21 | 21 | 17 | 19 | 19 | 15 | - | - | - | - | - | - |
| Druckfestigkeit nach 3 d [N/mm²] | 25 | 19 | 16 | 35 | 35 | 35 | 35 | 35 | 35 | - | - | - | - | - | - |
| Druckfestigkeit nach 28 d [N/mm²] | 34 | 37 | 36 | 70 | 70 | 70 | 70 | 70 | 70 | - | - | - | - | - | - |
| Schwindmaß [mm/m] | -0,6 | -0,6 | -0,7 | -0,1 | -0,1 | -0,1 | -0,1 | -0,1 | -0,1 | - | - | - | - | - | - |
| Verwölbung [mm] | 1,0 | 1,0 | 1,2 | 0,25 | 0,2 | 0,2 | 0,25 | 0,2 | 0,2 | - | - | - | - | - | - |

| | | | | | | | | | | | | | | | |
|---|---|---|---|---|---|---|---|---|---|---|---|---|---|---|---|
| # nicht erfindungsgemäß | | | | | | | | | | | | | | | |

**Tabelle 1 (Fortsetzung)**

| Trockenmörtel | Trockenmörtel 6^{#} | | | Trockenmörtel 7^{#} | | | Trockenmörtel 8 | | | Trockenmörtel 9 | | | Trockenmörtel 10 | | |
|---|---|---|---|---|---|---|---|---|---|---|---|---|---|---|---|
| Temperatur [° C] | 30 | 23 | 5 | 30 | 23 | 5 | 30 | 23 | 5 | 30 | 23 | 5 | 30 | 23 | 5 |
| Verarbeitungszeit [h] | 2 | 2 | 3 | 0,5 | 0,5 | 1,5 | 3,5 | 3 | 3,5 | 2 | 3 | 4,5 | 2,5 | 3 | 4,5 |
| Druckfestigkeit nach 1 d [N/mm²] | 1,5 | 1 | 0,1 | - | - | - | 18 | 20 | 17 | 18 | 20 | 10 | 18 | 20 | 10 |
| Druckfestigkeit nach 3 d [N/mm²] | - | - | - | - | - | - | 35 | 35 | 35 | 35 | 35 | 25 | 35 | 35 | 30 |
| Druckfestigkeit nach 28 d [N/mm²] | - | - | - | 50 | 45 | 45 | 65 | 60 | 65 | - | - | - | - | - | - |

| | | | | | | | | | | | | | | | |
|---|---|---|---|---|---|---|---|---|---|---|---|---|---|---|---|
| # nicht erfindungsgemäß | | | | | | | | | | | | | | | |

**Tabelle 1 (Fortsetzung)**

| Trockenmörtel | Trockenmörtel 11 | | | Trockenmörtel 12^{#} | | | Trockenmörtel 13^{#} | | |
|---|---|---|---|---|---|---|---|---|---|
| Temperatur [° C] | 30 | 23 | 5 | 30 | 23 | 5 | 30 | 23 | 5 |
| Verarbeitungszeit [h] | 2 | 3 | 5 | 4 | 5 | 7,5 | 1,5 | 3 | 7 |
| Druckfestigkeit nach 1 d [N/mm²] | 18 | 20 | 10 | 3 | 2 | 0,5 | 4 | 2 | 0 |
| Druckfestigkeit nach 3 d [N/mm²] | 35 | 35 | 25 | - | - | - | - | - | - |
| Druckfestigkeit nach 28 d [N/mm²] | - | - | - | 15 | 20 | 18 | 20 | 25 | 25 |

| | | | | | | | | | |
|---|---|---|---|---|---|---|---|---|---|
| # nicht erfindungsgemäß | | | | | | | | | |

Die Ergebnisse zeigen, dass die erfindungsgemäßen Trockenmörtelmischungen bei Raumtemperatur und bei niedrigeren Temperaturen lange Verarbeitungszeiten, hohe Frühfestigkeiten, niedriges Schwindmaß und geringe Verwölbungen aufweisen. Der Vergleich von Trockenmörtel 4 mit Trockenmörtel 2 zeigt, dass ohne die erste Kaliumquelle die Härtung bei tiefer Temperatur unzureichend ist. Der Vergleich von Trockenmörtel 5 mit Trockenmörtel 2 zeigt, dass ohne die zweite Kaliumquelle nahezu keine Verzögerungswirkung beobachtet wird. Wird anstelle des Kaliumsalzes freie Weinsäure eingesetzt, erhält man eine geringe Festigkeit nach 1 Tag (Trockenmörtel 6). Wird anstelle von Kaliumcarbonat Natriumcarbonat eingesetzt, erhält man eine deutlich geringe Verzögerungswirkung (Trockenmörtel 7). Wird anstelle des Kaliumsalzes Natriumgluconat oder Citronensäure eingesetzt, erhält man eine geringe Festigkeit bzw. unzureichende Härtung bei tiefer Temperatur (Trockenmörtel 12 bzw. 13).

## Patentansprüche

1. Pulverförmige Bindemittelzusammensetzung, umfassend
a) Portlandzement,
b) Aluminatzement in einem Gewichtsverhältnis von a) : b) von 90:10 bis 10:90,
c) 0,1 bis 50 Gew.-% wenigstens einer Calciumsulfatquelle, gerechnet als CaSO₄, bezogen auf das Gesamtgewicht der Komponenten a), b) und c),
d) eine erste Kaliumquelle, ausgewählt unter Kaliumsalzen anorganischer Säuren und Kaliumsalzen von C₁-C₃-Carbonsäuren, und
e) eine zweite Kaliumquelle, ausgewählt unter Kaliumsalzen von α-Hydroxycarbonsäuren.

2. Bindemittelzusammensetzung nach Anspruch 1, wobei die Calciumsulfatquelle eine Löslichkeit (20 ° C) von weniger als 5 g/l aufweist.

3. Bindemittelzusammensetzung nach einem der vorhergehenden Ansprüche, wobei die erste Kaliumquelle Kaliumcarbonat ist.

4. Bindemittelzusammensetzung nach einem der vorhergehenden Ansprüche, wobei die zweite Kaliumquelle Natriumkaliumtartrat-tetrahydrat ist.

5. Bindemittelzusammensetzung nach einem der vorhergehenden Ansprüche, enthaltend Portlandzement und Aluminatzement in einem Gewichtsverhältnis von 80:20 bis 40:60.

6. Bindemittelzusammensetzung nach einem der vorhergehenden Ansprüche, enthaltend 10 bis 45 Gew.-%, Calciumsulfatquelle, bezogen auf das Gesamtgewicht der Komponenten a), b) und c).

7. Bindemittelzusammensetzung nach einem der vorhergehenden Ansprüche, enthaltend die erste Kaliumquelle und die zweite Kaliumquelle in einem Gewichtsverhältnis 10:90 bis 90:10, jeweils gerechnet als K₂O.

8. Bindemittelzusammensetzung nach einem der vorhergehenden Ansprüche, außerdem umfassend wenigstens eine Eisen(II)-ionenquelle.

9. Bindemittelzusammensetzung nach Anspruch 8, wobei die Eisen(II)-ionenquelle eine Löslichkeit (20 ° C) von mehr als 90 g/l aufweist.

10. Bindemittelzusammensetzung nach Anspruch 9, wobei die Eisen(II)-ionenquelle unter Eisen(II)-sulfat-heptahydrat, Eisen(II)-sulfat-tetrahydrat und Eisen(II)-sulfat-monohydrat ausgewählt ist.

11. Bindemittelzusammensetzung nach einem der vorhergehenden Ansprüche, außerdem umfassend einen Abbindeverzögerer.

12. Bindemittelzusammensetzung nach einem der vorhergehenden Ansprüche, außerdem umfassend eine latent-hydraulische und/oder eine puzzolanische Komponente.

13. Bindemittelzusammensetzung nach einem der vorhergehenden Ansprüche, außerdem umfassend einen Füllstoff.

14. Bindemittelzusammensetzung nach einem der vorhergehenden Ansprüche, außerdem umfassend mindestens einen Zusatzstoff, der ausgewählt ist unter Verdickern, Wasserretentionsmitteln, pH-Modifikatoren, Beschleunigern, Rheologiemodifikatoren, Hydrophobierungsmitteln, Pigmenten, organischen oder anorganischen Fasern sowie Gemischen davon.

15. Verfahren zur Herstellung einer pulverförmigen Bindemittelzusammensetzung durch Mischen in beliebiger Reihenfolge von
a) Portlandzement,
b) Aluminatzement in einem Gewichtsverhältnis von a) : b) von 90:10 bis 10:90,
c) 0,1 bis 50 Gew.-% wenigstens einer Calciumsulfatquelle, gerechnet als CaSO₄, bezogen auf das Gesamtgewicht der Komponenten a), b) und c),
d) einer ersten Kaliumquelle, ausgewählt unter Kaliumsalzen anorganischer Säuren und Kaliumsalzen von C₁-C₃-Carbonsäuren, und
e) einer zweiten Kaliumquelle, ausgewählt unter Kaliumsalzen von α-Hydroxycarbonsäuren.
